# EUROPÄISCHE PATENTSCHRIFT

(11) **EP 3 982 073 B1**
(45) Veröffentlichungstag und Bekanntmachung des Hinweises auf die Patenterteilung: **21.08.2024**
(21) Anmeldenummer: 21197147.8
(22) Anmeldetag: 16.09.2021
(51) Int. Cl.: F28D 1/00

(54) **ROHRBODEN, WÄRMEÜBERTRAGER SOWIE VERFAHREN ZUM HERSTELLEN EINES WÄRMEÜBERTRAGERS**
TUBE SHEET, HEAT EXCHANGER AND METHOD FOR MANUFACTURING A HEAT EXCHANGER
FOND TUBULAIRE, ÉCHANGEUR DE CHALEUR, AINSI QUE PROCÉDÉ DE FABRICATION D'UN ÉCHANGEUR DE CHALEUR

(30) Priorität: 08.10.2020 DE 102020212713
(43) Veröffentlichungstag der Anmeldung: 13.04.2022
(73) Patentinhaber: MAHLE International GmbH, 70376 Stuttgart (DE)
(72) Erfinder: Meiser, Alexander, 70435 Stuttgart (DE); Renz, Marco, 73732 Esslingen (DE)
(74) Vertreter: BRP Renaud & Partner mbB Rechtsanwälte Patentanwälte Steuerberater

(56) Entgegenhaltungen:
- DE-A1- 102015 205 605
- US-A1- 2012 199 332
- US-A1- 2020 166 277
- US-B2- 8 978 746

## Beschreibung

Die vorliegende Erfindung betrifft einen Rohrboden für einen Wärmeübertrager sowie einen Wärmeübertrager mit einem solchen Rohrboden. Die Erfindung betrifft ferner ein Verfahren zum Herstellen eines solchen Wärmeübertragers. Insbesondere betrifft die Erfindung einen Rohrboden wie im Oberbegriff des Anspruchs 1 definiert, und wie in US 2012/199332 illustriert.

Wärmeübertrager werden seit geraumer Zeit mit Rohrböden ausgeführt, welche mit Durchbrüchen zum Aufnehmen von Rohrkörpern ausgebildet sind. Dabei werden bei der Herstellung solcher Wärmeübertrager besagte Rohrkörper üblicherweise in die Durchbrüche eingesteckt und dann mit den Rohrböden verlötet. Ein solcher Rohrböden dient typischerweise dazu, die Rohrkörper relativ zueinander im Abstand zu halten. Außerdem können solche Rohrböden einen Fluidsammler oder einen Fluidverteiler begrenzen, aus welchem ein Fluid auf Rohrkörper-Innenräume der Rohrkörper verteilbar bzw. sammelbar ist. Hierfür ist es erforderlich, dass bei dem Verlöten eine Fuge zwischen dem Durchbruch des Rohrbodens und dem in diesem Durchbruch aufgenommenen Rohrkörper fluiddicht verschlossen wird, weshalb ein vollständiges - das heißt den Rohrkörper in der Fuge wenigstens bereichsweise vollständig umgebendes - Füllen der Füge mit einem Lot gewährleistet werden muss. Um dafür zu sorgen, dass das Lot möglichst die gesamte Fuge füllt, wird vor dem Lötprozess üblicherweise händisch mittels einer Dosierpistole eine Flussmittel-Paste aufgetragen, mittels welcher die Fließeigenschaften des Lots derart verbessert werden, dass das Lot nach einer Erwärmung über seine Solidus-Temperatur in einem flüssigen Zustand verbessert in die Fuge fließen kann.

Als nachteilig erweist es sich dabei, dass aufgrund der in den Durchbrüchen aufgenommenen Rohrkörper, insbesondere bei mehrreihigen Systemen, eine Zugänglichkeit der Fugen beeinträchtigt ist. Dies hat zur Folge, dass ein gleichmäßiges Aufbringen des Flussmittels, wie ein solches zur fluiddichten Verlötung von Nöten ist, nicht oder nur unter erheblichem Mehraufwand gewährleistet werden kann.

Es ist daher eine Aufgabe der vorliegenden Erfindung, für Rohrböden für einen Wärmeübertrager und für Wärmeübertrager mit einem solchen Rohrboden sowie für Verfahren zum Herstellen eines solchen Wärmeübertragers - insbesondere zur Beseitigung des voranstehend genannten Nachteils - neue Wege aufzuzeigen.

Diese Aufgabe wird von einem Rohrboden gemäß dem unabhängigen Patentanspruch 1 sowie von dem Wärmeübertrager gemäß dem nebengeordneten Patentanspruch 13 und dem Verfahren gemäß dem nebengeordneten Patentanspruch 14 gelöst. Bevorzugte Ausführungsformen sind Gegenstand der abhängigen Patentansprüche.

Grundidee der Erfindung ist demnach, einen Rohrboden für einen Wärmeübertrager so auszubilden, dass zwei zum Aufnehmen jeweils eines Rohrkörpers eingerichtete Durchbrüche des Rohrbodens mittels einer ebenfalls im Bodenkörper ausgebildeten Sicke miteinander verbunden sind.

Dies erlaubt es vorteilhaft, dass bei einem stoffschlüssigen Fügen von in den Durchbrüchen aufgenommenen Rohrkörpern mit dem Rohrboden ein Fügemittel bzw. ein Fügehilfsmittel, also typischerweise ein Lot bzw. ein Flussmittel, mittels der Sicke des Rohrbodens gleichmäßig auf die Durchbrüche verteilt werden kann. Dies bedeutet, dass zwischen je einem Durchbruch und dem im jeweiligen Durchbruch aufgenommenen Rohrkörper vorhandene Fugen gleichmäßig mit Fügemittel bzw. Fügehilfsmittel benetzt werden kann, selbst wenn eine der Fugen zumindest bereichsweise schlecht zugänglich ist, da das Fügemittel bzw. Fügehilfsmittel über die Sicke auch an solche schlecht zugänglichen Stellen der Fuge fließen kann.

Ein erfindungsgemäßer Rohrboden für einen Wärmeübertrager, welcher zweckmäßig für ein Kraftfahrzeug einsetzbar ist, umfasst einen Bodenkörper. Der Bodenkörper ist bevorzugt im Wesentlichen flächig ausgebildet. In dem Bodenkörper sind zumindest zwei Durchbrüche zum Aufnehmen jeweils eines Rohrkörpers ausgebildet. Die beiden Durchbrüche des Rohrbodens sind mittels einer ebenfalls im Bodenkörper ausgebildeten Sicke miteinander verbunden. Wie voranstehend bereits erläutert, erlaubt diese Sicke vorteilhaft, dass ein Fügemittel bzw. Fügehilfsmittel zwei Fugen, von welchen jeweils ein zwischen je einem der Durchbrüche und dem im jeweiligen Durchbruch aufgenommenen Rohrkörper vorhandenen ist, besonders gut mit dem Fügemittel gefüllt werden können, selbst wenn eine oder beide der Fugen zumindest bereichsweise schwer zugänglich ist/sind.

Erfindungsgemäß, weist die Sicke zwei einander gegenüberliegende Sickenenden auf, von welchen jeweils eines in einen der beiden Durchbrüche mündet. Vorteilhaft kann so über die Sicke das Fügemittel bzw. das Fügehilfsmittel von dem einen Durchbruch zum anderen Durchbruch besonders gut überströmen.

Gemäß einer weiteren bevorzugten Weiterbildung des Rohrbodens ist der Bodenkörper in einer Bodenebene angeordnet. Die Sicke ist entlang einer Erstreckungsrichtung vom Bodenkörper weg offen ausgebildet. Diese Erstreckungsrichtung verläuft dabei senkrecht zur Bodenebene. Eine solche Sicke kann vorteilhaft besonders kostengünstig mittels eines Umformverfahrens erzeugt werden.

Gemäß einer weiteren bevorzugten Weiterbildung des Rohrbodens bilden die beiden Durchbrüche jeweils einen Aufnahmeraum für einen Rohrkörper, welcher sich entlang der Erstreckungsrichtung erstreckt. Die beiden Aufnahmeräume sind mittels der Sicke fluidisch kommunizierend miteinander verbunden. Dies erlaubt es vorteilhaft, dass mittels der Sicke eine Menge an Fügemittel bzw. Fügehilfsmittel zum stoffschlüssigen Fügen von in den Aufnahmeräumen aufgenommenen Rohrkörpern besonders gleichmäßig auf die beiden Durchbrüche bzw. Aufnahmeräume verteilt werden kann.

Eine weitere vorteilhafte Weiterbildung des Rohrbodens sieht vor, dass die Sicke länglich ausgebildet ist und sich entlang einer Längsrichtung erstreckt. Diese Längsrichtung verläuft orthogonal zur Erstreckungsrichtung der Sicke. Eine solche Sicke erweist sich als unter strömungstechnischen Aspekten besonders geeignet.

Bei einer weiteren bevorzugten Weiterbildung des Rohrbodens weist die Sicke quer zur Längsrichtung geschnitten eine gerundete Formgebung auf. Vorteilhaft ist eine solche Sicke besonders einfach herstellbar.

Gemäß einer weiteren bevorzugten Weiterbildung des Rohrbodens weist die Sicke in ihrer Erstreckungsrichtung zum Bodenkörper des Rohrbodens hin gemessen eine Sickentiefe von 0,5 mm bis 2 mm auf. Alternativ oder zusätzlich weist die Sicke senkrecht zu ihrer Erstreckungsrichtung und senkrecht zu ihrer Längsrichtung gemessen eine Sickenbreite von 2 mm bis 8 mm auf. Mittels einer solchen Sicke kann das Fügemittel bzw. das Fügehilfsmittel besonders gut auf die Durchbrüche verteilt werden.

Bei einer weiteren vorteilhaften Weiterbildung des Rohrbodens ist zur Aufnahme (jeweils) eines Rohrkörpers zumindest einer der Durchbrüche, insbesondere jeder der Durchbrüche, sich entlang der Längsrichtung erstreckend länglich ausgebildet. Zweckmäßig ist ein solcher in dem länglichen Durchbruch aufnehmbarer Rohrkörper als Flachrohr ausgebildet. Alternativ oder zusätzlich ist zumindest einer der Durchbrüche, vorzugsweise jeder der Durchbrüche, in Längsrichtung beiden Ends sickenartig verbreitert. Dies wirkt sich förderlich auf die gewünschte vollständige Füllung der Fugen mit Fügemittel aus.

Gemäß einer weiteren bevorzugten Weiterbildung des Rohrbodens weist der Bodenkörper mehrere im Wesentlichen gleichartig ausgebildete Durchbrüche auf. Diese im Wesentlichen gleichartig ausgebildeten Durchbrüche sind entlang der Längsrichtung, insbesondere äquidistant zueinander, in einer Zeile angeordnet. Dabei weist der Bodenkörper mehrere im Wesentlichen gleichartig ausgebildete Sicken auf, von welchen je eine zwischen zwei benachbarten der Durchbrüche angeordnet ist, so dass in der Zeile Durchbrüche und Sicken im Wechsel angeordnet sind. Vorteilhaft kann somit mittels der Sicken ein Fügemittel bzw. ein Fügehilfsmittel auf alle Durchbrüche - die dann über die Sicken fluidisch in Reihe geschaltet sind - der gesamten Zeile gleichmäßig verteilt werden.

Gemäß einer weiteren vorteilhaften Weiterbildung des Rohrbodens umfasst der Bodenkörper mehrere Zeilen an Durchbrüchen und Sicken. Diese mehreren Zeilen sind im Wesentlichen gleichartig ausgebildet und senkrecht zur Erstreckungsrichtung der Sicken und winkelig zu ihrer Längsrichtung entlang einer Querrichtung des Rohrbodens im Abstand zueinander angeordnet. Vorzugsweise sind die Zeilen senkrecht zur Erstreckungsrichtung und senkrecht zur Längsrichtung entlang der Querrichtung im Abstand, insbesondere äquidistant, zueinander angeordnet. Mittels der Sicken wird dabei vorteilhaft selbst bei der infolge der mehrzeiligen Ausbildung des Bodenkörpers erheblich beeinträchtigten Zugänglichkeit der Durchbrüche bzw. der Fugen zwischen je einem der Durchbrüche und einem in einem der Durchbrüche aufgenommenen Rohrkörper die wünschenswerte gleichmäßige Verteilung des Fügemittels bzw. des Fügehilfsmittels sichergestellt.

Bei einer weiteren vorteilhaften Weiterbildung des Rohrbodens ist zumindest einer der Durchbrüche, vorzugsweise jeder der Durchbrüche, als Durchzug ausgebildet. Ein solcher Durchzug weist von der Sicke abgewandt einen Durchzugskragen auf, welcher den Aufnahmeraum des betreffenden als Durchzug ausgebildeten Durchbruchs teilweise begrenzt. Vorteilhaft wird so eine besonders gro-ße Fügefläche des Durchbruchs erreicht, welche gemeinsam mit dem in dem Durchbruch aufgenommenen Rohrkörper die Fuge begrenzt. Eine solche vergrößerte Fügefläche wirkt sich vorteilhaft auf eine Festigkeit der in der Fuge ausgebildeten stoffschlüssigen Verbindung zwischen dem Rohrkörper und dem Bodenkörper aus.

Gemäß einer weiteren bevorzugten Weiterbildung des Rohrbodens ist der Bodenkörper abseits der Durchbrüche und der Sicke im Wesentlichen plan ausgebildet. Ein solcher Bodenkörper ist vorteilhaft besonders kostengünstig aus einem flächigen Halbzeug mittels eines Stanz-Präge-Verfahrens herstellbar.

Die Erfindung betrifft außerdem einen Wärmeübertrager, welcher zweckmäßig für den Einsatz in einem Kraftfahrzeug eingerichtet ist. Der Wärmeübertrager umfasst wenigstens einen erfindungsgemäßen Rohrboden wie voranstehend beschrieben. Außerdem umfasst der Wärmeübertrager eine Anzahl an Rohrkörpern, welche einer Anzahl an Durchbrüchen des Rohrbodens entspricht. Dabei ist jeweils einer dieser Rohrkörper in jeweils einem der Durchbrüche des Rohrbodens aufgenommen und befestigt, so dass zwischen den Rohrkörpern und den jeweiligen Durchbrüchen ein fluiddichter Kontakt ausgebildet ist. Die voranstehend aufgezeigten Vorteile des erfindungsgemäßen Rohrbodens übertragen sich in analoger Weise auch auf den erfindungsgemäßen Wärmeübertrager mit einem solchen Rohrboden.

Darüber hinaus betrifft die Erfindung ein Verfahren zum Herstellen eines erfindungsgemäßen Wärmeübertragers gemäß der voranstehenden Beschreibung. Das Verfahren umfasst eine Maßnahme a), bei welcher ein erfindungsgemäßer Rohrboden nach obiger Beschreibung bereitgestellt wird. Außerdem umfasst das Verfahren eine Maßnahme b) gemäß welcher wenigstens zwei Rohrkörper derart angeordnet werden, dass jeweils einer der Rohrkörper unter Ausbildung einer Fuge in jeweils einem der Durchbrüche des Rohrbodens aufgenommen wird. Außerdem umfasst das Verfahren eine Maßnahme c) gemäß welcher ein stoffschlüssiges Fügen der Rohrkörper mit dem Rohrboden erfolgt. Dabei wird in Maßnahme c) ein Fügemittel und - alternativ oder zusätzlich - ein Fügehilfsmittel mittels der Sicke des Rohrbodens gleichmäßig auf die Fugen verteilt. Die zuvor bereits aufgezeigten Vorteile des erfindungsgemäßen Wärmeübertragers mit einem erfindungsgemäßen Rohrboden übertragen sich auch auf das erfindungsgemäße Verfahren zum Herstellen eines solchen Wärmeübertragers.

Gemäß einer vorteilhaften Weiterbildung des Verfahrens erfolgt das stoffschlüssige Fügen gemäß Maßnahme c) mittels Lötens. Dabei werden als Fügemittel ein Lot und als Fügehilfsmittel ein Flussmittel eingesetzt. Dies erlaubt vorteilhaft eine besonders fluiddichte Verbindung zwischen den Rohrkörpern und dem Rohrboden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: in einer perspektivischen Darstellung ein Beispiel eines erfindungsgemäßen Rohrbodens für einen Wärmeübertrager,
- Fig. 2: ein Detail des Beispiels der Fig. 1,
- Fig. 3: ein weiteres Beispiel eines erfindungsgemäßen Rohrbodens für einen Wärmeübertrager in einer perspektivischen Darstellung,
- Fig. 4: beispielhaft ein Verfahren zum Herstellen eines erfindungsgemäßen Wärmeübertragers in einem Ablaufschaubild.

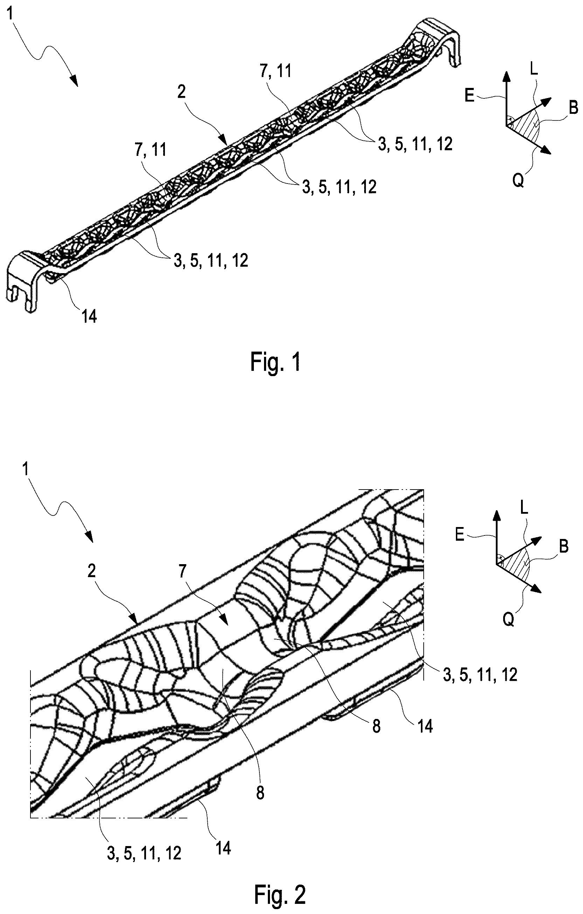

In der Fig. 1 ist einer perspektivischen Darstellung ein Beispiel eines erfindungsgemäßen Rohrbodens 1 für einen Wärmeübertrager 16 gezeigt. Ein solcher Wärmeübertrager 16 ist zweckmäßig für ein Kraftfahrzeug einsetzbar. Der Rohrboden 1 weist einen Bodenkörper 2 auf, welcher dem gezeigten Beispiel entsprechend im Wesentlichen flächig ausgebildet ist. In dem Bodenkörper 2 sind wenigstens zwei Durchbrüche 3 zum Aufnehmen jeweils eines Rohrkörpers 4 ausgebildet. Solche Rohrkörper sind in der Figur 1 aus Gründen der Übersichtlichkeit nicht gezeigt. Die wenigstens zwei Durchbrüche 3 sind mittels einer ebenfalls im Bodenkörper 2 ausgebildeten Sicke 7 miteinander verbunden. Im Beispiel der Figur 1 sind drei solcher Durchbrüche vorhanden, wobei jeweils zwei benachbarte der Durchbrüche 3 mittels einer Sicke 7 miteinander verbunden sind. Dies bedeutet, dass im Beispiel der Figur 1 zwei Sicken 7 vorhanden sind.

In der Figur 2 ist in einer perspektivischen Detaildarstellung das Beispiel der Figur 1 gezeigt. Es ist erkennbar, dass die Sicke 7 zwei einander gegenüberliegende Sickenenden 8 aufweist. Jeweils eines der Sickenenden 8 mündet in je einen der wenigstens zwei Durchbrüche 3.

Anhand der Figuren 1 und 2 ist außerdem erkennbar, dass der Bodenkörper 2 in einer Bodenebene B angeordnet ist. Die Sicke 7 ist entlang einer Erstreckungsrichtung E vom Bodenkörper 2 weg offen ausgebildet. Dabei erstreckt sich die Erstreckungsrichtung E senkrecht zur Bodenebene B des Bodenkörpers 2.

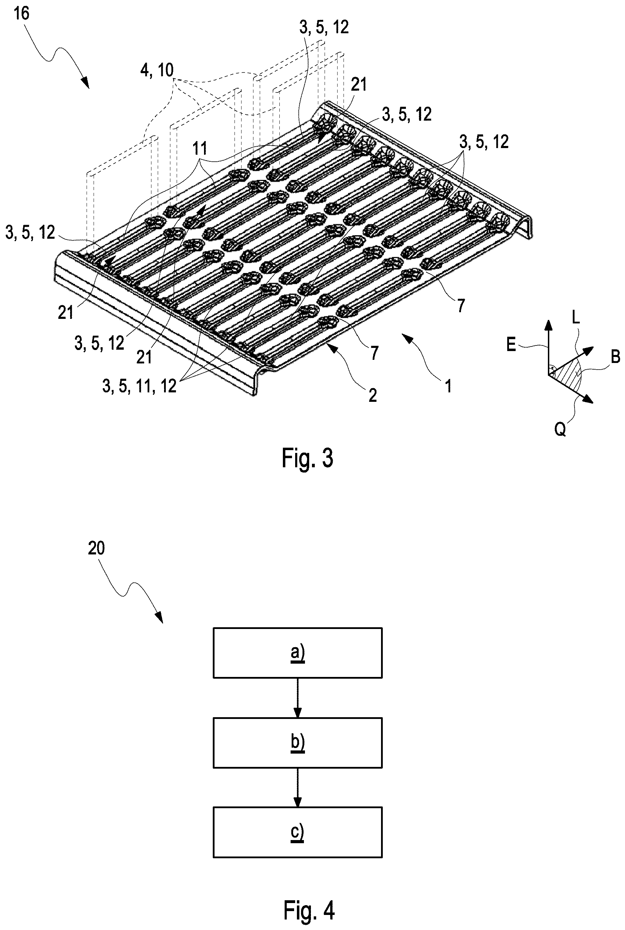

In der Figur 3 ist in einer perspektivischen Darstellung ein weiteres Beispiel eines erfindungsgemäßen Rohrbodens gezeigt. Es ist erkennbar, dass die Durchbrüche 3 jeweils einen Aufnahmeraum 5 für einen Rohrkörper 4 bilden, der sich entlang der Erstreckungsrichtung E erstreckt. Dabei kommunizieren die wenigstens zwei Aufnahmeräume 5 mittels der Sicke 7 fluidisch miteinander. Im Beispiel der Figur 3 ist erkennbar, dass je zwei benachbarte Aufnahmeräume 5 mittels je einer Sicke 7 fluidisch kommunizieren.

Die Figuren 1 bis 3 veranschaulichen außerdem, dass die Sicke 7 länglich ausgebildet ist und sich entlang einer Längsrichtung L erstreckt. Die Längsrichtung L verläuft orthogonal zur Erstreckungsrichtung E der Sicke 7. Die Sicke 7 weist quer zu ihrer Längsrichtung L geschnitten eine gerundete Formgebung auf. Die Sicke 7 weist in Erstreckungsrichtung E zum Bodenkörper 2 des Rohrbodens 1 hin gemessen eine Sickentiefe von 0,5 mm bis 2 mm, im Beispiel 1,5 mm, auf. In den gezeigten Beispielen weist die Sicke 7 eine senkrecht zur Erstreckungsrichtung E und senkrecht zur Längsrichtung L gemessene Sickenbreite von 2 mm bis 8 mm, im Beispiel 6 mm, auf.

In der Figur 3 ist außerdem gezeigt, dass zur Aufnahme jeweils eines Rohrkörpers 4, welcher hier als Flachrohr 10 ausgebildet ist, wenigstens einer der Durchbrüche 3 - im gezeigten Beispiel jeder der Durchbrüche 3 - sich entlang der Längsrichtung L länglich erstreckend ausgebildet ist. Dabei ist der zumindest eine Durchbruch 3 - im gezeigten Beispiel alle Durchbrüche 3 - in Längsrichtung L beiden Ends sickenartig verbreitert. Es ist ferner erkennbar, dass der Bodenkörper 2 mehrere im Wesentlichen gleichartig ausgebildete Durchbrüche 3 aufweist. Im gezeigten Beispiel sind alle Durchbrüche 3 im Wesentlichen gleichartig ausgebildet. Die im Wesentlichen gleichartig ausgebildeten Durchbrüche 3 sind entlang der Längsrichtung L zueinander beabstandet in einer Zeile 11 angeordnet. Die in der Zeile 11 angeordneten Durchbrüche 3 sind entlang der Längsrichtung L äquidistant zueinander angeordnet. Der Bodenkörper 2 weist mehrere im Wesentlichen gleichartig ausgebildete Sicken 7 auf. Je eine dieser Sicken 7 ist zwischen zwei benachbarten der Durchbrüche 3 angeordnet, so dass in der Zeile 11 Durchbrüche 3 und Sicken 7 im Wechsel angeordnet sind.

Aus dem Beispiel der Figur 3 ergibt es sich außerdem, dass der Bodenkörper 2 mehrere Zeilen 11 an Durchbrüchen 3 und Sicken 7 umfasst. Die Zeilen 11 sind dabei im Wesentlichen gleichartig ausgebildet. Die Zeilen 11 sind senkrecht zur Erstreckungsrichtung E und winkelig - im gezeigten Beispiel senkrecht - zur Längsrichtung L entlang einer Querrichtung Q des Rohrbodens 1 im Abstand zueinander angeordnet. Im Beispiel der Figur 3 sind die Zeilen 11 entlang der Querrichtung Q des Rohrbodens 1 im Abstand äquidistant zueinander angeordnet. Die Längsrichtung L und die Querrichtung Q spannen gemeinsam die Bodenebene B auf.

Die Figuren 1 bis 3 zeigen darüber hinaus, dass zumindest einer der Durchbrüche 3 - in den gezeigten Beispielen alle der Durchbrüche 3 - als Durchzug 12 ausgebildet ist/sind. Dabei weist ein solcher Durchzug 12 von der Sicke 7 abgewandt einen Durchzugskragen 14 auf. Der Durchzugskragen 14 des Durchzugs 12 begrenzt den Aufnahmeraum 5 des betreffenden als Durchzug 12 ausgebildeten Durchbruchs 3 teilweise. Der Bodenkörper 2 ist in den gezeigten Beispielen als Blechformteil ausgebildet, welches eine entlang der Erstreckungsrichtung E - also senkrecht zur Bodenebene B - gemessene Blechstärke von 2 mm, aufweist. Es ist ferner erkennbar, dass der Bodenkörper 2 abseits der Durchbrüche 3 und der Sicke 7 im Wesentlichen plan ausgebildet ist.

Die Figur 3 veranschaulicht außerdem beispielhaft einen erfindungsgemäßen Wärmeübertrager 16, der von einem Kraftfahrzeug umfasst sein kann. Demnach weist der Wärmeübertrager 16 wenigstens einen erfindungsgemäßen Rohrboden 1 auf, wie ein solcher in den Figuren 1 bis 3 gezeigt und voranstehend bereits beschrieben ist. Der Wärmeübertrager 16 umfasst außerdem eine Anzahl an Rohrkörpern 4, welche einer Anzahl an Durchbrüchen 3 des Rohrbodens 1 entspricht. Aus Gründen der Übersichtlichkeit sind dabei in der Figur 3 lediglich vier Rohrkörper 4 exemplarisch gezeigt. Im Wärmeübertrager 16 ist jeweils einer der Rohrkörper 4 in jeweils einem der Durchbrüche 3 des Rohrbodens 1 aufgenommen und befestigt, so dass zwischen den Rohrkörpern 4 und den jeweiligen Durchbrüchen 3 ein fluiddichter Kontakt ausgebildet ist.

Die Figur 4 veranschaulicht in einem Ablaufschaubild beispielhaft ein erfindungsgemäßes Verfahren 20 zum Herstellen eines erfindungsgemäßen Wärmeübertragers 16. Das Verfahren 20 umfasst eine Maßnahme a), gemäß welcher ein erfindungsgemäßer Rohrboden 1, wie ein solcher in den Figuren 1 bis 3 gezeigt und voranstehend bereits beschrieben ist, bereitgestellt wird. Ferner umfasst das Verfahren 20 eine weitere Maßnahme b) gemäß welcher wenigstens zwei Rohrkörper 4 derart angeordnet werden, dass jeweils einer der Rohrkörper 4 unter Ausbildung einer Fuge 21 (vergleiche Figur 3) in jeweils einem der Durchbrüche 3 aufgenommen wird. Darüber hinaus umfasst das Verfahren 20 eine Maßnahme c), gemäß welcher die Rohrkörper 4 stoffschlüssig mit dem Rohrboden 1 gefügt werden. Dabei wird in Maßnahme c) ein Fügemittel und - alternativ oder zusätzlich - ein Fügehilfsmittel mittels der Sicke 7 des Rohrbodens 1 gleichmäßig auf die Fugen 21 verteilt. Das stoffschlüssige Fügen gemäß Maßnahme c) kann mittels Lötens erfolgen, wobei dann als Fügemittel ein Lot und als Fügehilfsmittel ein Flussmittel eingesetzt werden.

Alternativ kann das stoffschlüssige Fügen gemäß Maßnahme c) mittels Klebens erfolgen, wobei dann als Fügemittel ein Klebstoff eingesetzt wird.

## Patentansprüche

1. Rohrboden (1) für einen Wärmeübertrager (16), insbesondere für ein Kraftfahrzeug,
- mit einem, vorzugsweise im Wesentlichen flächig ausgebildeten, Bodenkörper (2), in welchem zumindest zwei Durchbrüche (3) zum Aufnehmen jeweils eines Rohrkörpers (4) ausgebildet sind,
**dadurch gekennzeichnet, dass**
- die beiden Durchbrüche (3) mittels einer ebenfalls im Bodenkörper (2) ausgebildeten Sicke (7) miteinander verbunden sind,
- die Sicke (7) zwei einander gegenüberliegende Sickenenden (8) aufweist, von welchen jeweils eines in einen der beiden Durchbrüche (3) mündet.

2. Rohrboden (1) nach Anspruch 1,
**dadurch gekennzeichnet, dass**
- der Bodenkörper (2) in einer Bodenebene (B) angeordnet ist,
- die Sicke (7) entlang einer Erstreckungsrichtung (E) vom Bodenkörper (2) weg offen ausgebildet ist, wobei sich die Erstreckungsrichtung (E) senkrecht zur Bodenebene (B) erstreckt.

3. Rohrboden (1) nach Anspruch 2,
**dadurch gekennzeichnet, dass**
- die beiden Durchbrüche (3) jeweils einen Aufnahmeraum (5) für einen Rohrkörper (4) bilden, welcher sich entlang der Erstreckungsrichtung (E) erstreckt;
- die beiden Aufnahmeräume (5) mittels der Sicke (7) fluidisch miteinander kommunizieren.

4. Rohrboden (1) nach Anspruch 2 oder 3,
**dadurch gekennzeichnet, dass**
die Sicke (7) länglich ausgebildet ist und sich entlang einer Längsrichtung (L) erstreckt, die orthogonal zur Erstreckungsrichtung (E) verläuft.

5. Rohrboden (1) nach Anspruch 4,
**dadurch gekennzeichnet, dass**
die Sicke (7) quer zu ihrer Längsrichtung (L) geschnitten eine gerundete Formgebung aufweist.

6. Rohrboden (1) nach einem der Ansprüche 4 oder 5,
**dadurch gekennzeichnet, dass**
- die Sicke (7) in Erstreckungsrichtung (E) zum Bodenkörper (2) des Rohrbodens (1) hin gemessen eine Sickentiefe von 0,5 mm bis 2 mm aufweist;
und/oder dass
- die Sicke (7) senkrecht zur Erstreckungsrichtung (E) und senkrecht zur Längsrichtung (L) gemessen eine Sickenbreite von 2 mm bis 8 mm aufweist.

7. Rohrboden (1) nach einem der Ansprüche 4 bis 6,
**dadurch gekennzeichnet, dass**
- zur Aufnahme (jeweils) eines, vorzugsweise als Flachrohr (10) ausgebildeten, Rohrkörpers (4) zumindest einer der Durchbrüche (3), vorzugsweise jeder Durchbruch (3), sich entlang der Lä bei ein ngsrichtung (L) länglich erstreckend ausgebildet ist; und/oder dass
- der zumindest eine Durchbruch (3), vorzugsweise jeder Durchbruch (3), in Längsrichtung (L) beiden Ends sickenartig verbreitert ist.

8. Rohrboden (1) nach einem der Ansprüche 4 bis 7,
**dadurch gekennzeichnet, dass**
- der Bodenkörper (2) mehrere im Wesentlichen gleichartig ausgebildete Durchbrüche (3) aufweist, welche entlang der Längsrichtung (L), vorzugsweise äquidistant zueinander, in einer Zeile (11) angeordnet sind;
- der Bodenköper (2) mehrere im Wesentlichen gleichartig ausgebildete Sicken (7) aufweist, von welchen je eine zwischen zwei benachbarten der Durchbrüche (3) angeordnet ist, sodass in der Zeile (11) Durchbrüche (3) und Sicken (7) im Wechsel angeordnet sind.

9. Rohrboden (1) nach Anspruch 8,
**dadurch gekennzeichnet, dass**
der Bodenkörper (2) mehrere Zeilen (11) an Durchbrüchen (3) und Sicken (7) umfasst, welche im Wesentlichen gleichartig ausgebildet sind und welche senkrecht zur Erstreckungsrichtung (E) und winkelig, insbesondere senkrecht, zur Längsrichtung (L) entlang einer Querrichtung (Q) des Rohrbodens (1) im Abstand, insbesondere äquidistant, zueinander angeordnet sind.

10. Rohrboden (1) nach einem der vorhergehenden Ansprüche,
**dadurch gekennzeichnet, dass**
zumindest einer der Durchbrüche (3), vorzugsweise jeder Durchbruch (3), als Durchzug (12) ausgebildet ist;
der Durchzug (12) von der Sicke (7) abgewandt einen Durchzugskragen (14) aufweist, welcher den Aufnahmeraum (5) des betreffenden als Durchzug (12) ausgebildeten Durchbruchs (3) teilweise begrenzt.

11. Rohrboden (1) nach einem der vorhergehenden Ansprüche,
**dadurch gekennzeichnet, dass**
der Bodenkörper (2) abseits der Durchbrüche (3) und der Sicke (7) im Wesentlichen plan ausgebildet ist.

12. Wärmeübertrager (16), insbesondere für ein Kraftfahrzeug,
- mit wenigstens einem Rohrboden (1) nach einem der vorhergehenden Ansprüche,
- mit einer Anzahl an Rohrkörpern (4), welche einer Anzahl an Durchbrüchen (3) des Rohrbodens (1) entspricht.
- wobei jeweils einer der Rohrkörper (4) in jeweils einem der Durchbrüche (3) des Rohrbodens (1) aufgenommen und befestigt ist, sodass zwischen den Rohrkörpern (4) und den jeweiligen Durchbrüchen (3) ein fluiddichter Kontakt ausgebildet ist.

13. Verfahren (20) zum Herstellen eines Wärmeübertragers (16) nach Anspruch 12,
umfassend folgende Maßnahmen,
a) Bereitstellen eines Rohrbodens (1) nach einem der Ansprüche 1 bis 11;
b) Anordnen wenigstens zweier Rohrkörper (4), sodass jeweils einer der Rohrkörper (4) unter Ausbildung einer Fuge (21) in jeweils einem der Durchbrüche (3) aufgenommen wird;
c) Stoffschlüssiges Fügen der Rohrkörper (4) mit dem Rohrboden (1), wobei ein Fügemittel und/oder ein Fügehilfsmittel mittels der Sicke (7) des Rohrbodens (1) gleichmäßig auf die Fugen (21) verteilt wird.

14. Verfahren (20) nach Anspruch 13,
**dadurch gekennzeichnet, dass**
das stoffschlüssige Fügen gemäß Maßnahme c) mittels Lötens erfolgt, wobei ein Lot als Fügemittel und ein Flussmittel als Fügehilfsmittel eingesetzt werden.

## Claims

1. Tube sheet (1) for a heat exchanger (16), in particular for a motor vehicle,
- having a base body (2), preferably of a substantially planar design, in which at least two openings (3), each for each receiving a tubular body (4), are formed, **characterised in that**
- the two openings (3) are connected to one another by means of a bead (7), which is also formed in the base body (2),
- the bead (7) has two bead ends (8) positioned opposite each other, one of which leads into one of the two openings (3).

2. Tube sheet (1) according to claim 1,
**characterised in that**
- the base body (2) is arranged in a ground plane (B),
- the bead (7) is formed open away from the base body (2) along an extension direction (E), wherein the extension direction (E) extends perpendicular to the ground plane (B).

3. Tube sheet (1) according to claim 2,
**characterised in that**
- the two openings (3) each form a receiving space (5) for a tubular body (4), which extends along the extension direction (E),
- the two receiving spaces (5) communicate fluidly with one another by means of the bead (7).

4. Tube sheet (1) according to claim 2 or 3,
**characterised in that**
the bead (7) is elongated and extends along a longitudinal direction (L), which is at right angles to the extension direction (E).

5. Tube sheet (1) according to claim 4,
**characterised in that**
the bead (7) has a rounded shape cut across its longitudinal direction (L).

6. Tube sheet (1) according to any one of claims 4 or 5,
**characterised in that**
- the bead (7) has a bead depth of 0.5 mm to 2 mm measured in the extension direction (E) toward the base body (2) of the tube sheet (1), and/or that
- the bead (7) has a bead width of 2 mm to 8 mm measured perpendicular to the extension direction (E) and perpendicular to the longitudinal direction (L).

7. Tube sheet (1) according to any one of claims 4 to 6,
**characterised in that**
- at least one of the openings (3), preferably each opening (3), is formed extending longitudinally along the longitudinal direction (L) for (each) receiving a tubular body (4), preferably formed as a flat tube (10), and/or that
- the at least one opening (3), preferably each opening (3), is widened in a bead-like manner in a longitudinal direction (L) at both ends.

8. Tube sheet (1) according to any one of claims 4 to 7,
**characterised in that**
- the base body (2) has a plurality of substantially identically formed openings (3), which are arranged in a row (11) along the longitudinal direction (L), preferably equidistant from one another,
- the base body (2) has a plurality of substantially identically formed beads (7), one of which is arranged between two adjacent openings (3), such that openings (3) and beads (7) are arranged alternately in the row (11).

9. Tube sheet (1) according to claim 8,
**characterised in that**
the base body (2) comprises a plurality of rows (11) of openings (3) and beads (7), which are substantially identically formed and which are arranged perpendicular to the extension direction (E) and at an angle, in particular perpendicular, to the longitudinal direction (L) along a transverse direction (Q) of the tube sheet (1) at a distance, in particular equidistant, from one another.

10. Tube sheet (1) according to any of the preceding claims,
**characterised in that**
at least one of the openings (3), preferably each opening (3), is formed as a passage (12),
the passage (12) has a passage collar (14) facing away from the bead (7), which partially delimits the receiving space (5) of the relevant opening (3) formed as a passage (12).

11. Tube sheet (1) according to any of the preceding claims,
**characterised in that**
the base body (2) is formed substantially flat away from the openings (3) and the bead (7).

12. Heat exchanger (16), in particular for a motor vehicle,
- having at least one tube sheet (1) according to any of the preceding claims,
- having a number of tubular bodies (4), which correspond to a number of openings (3) in the tube sheet (1).
- wherein each one of the tubular bodies (4) is received and secured in each one of the openings (3) in the tube sheet (1), such that a fluid-tight contact is formed between the tubular bodies (4) and the respective openings (3).

13. Method (20) for producing a heat exchanger (16) according to claim 12, comprising the following steps,
a) Providing a tube sheet (1) according to any one of claims 1 to 11,
b) Arranging at least two tubular bodies (4), such that each one of the tubular bodies (4) is received while forming a joint (21) in each one of the openings (3),
c) Integrally joining the tubular body (4) to the tube sheet (1), wherein a joining means and/or a joining aid is distributed uniformly on the joins (21) by means of the bead (7) of the tube sheet (1).

14. Method (20) according to claim 13,
**characterised in that**
the integral joining according to step c) is performed by soldering, wherein a solder is used as a joining means and a flux is used as a joining aid.

## Revendications

1. Fond tubulaire (1) pour un échangeur de chaleur (16), en particulier pour un véhicule automobile,
- avec un corps de fond (2) formée de préférence sensiblement à plat, dans lequel au moins deux perçages (3) sont réalisés pour la réception respectivement d'un corps tubulaire (4),
**caractérisé en ce que**
- les deux perçages (3) sont reliés l'un à l'autre au moyen d'une moulure (7) formée aussi dans le corps de fond (2),
- la moulure (7) présente deux extrémités de moulure (8) opposées l'une à l'autre, desquelles respectivement une débouche dans un des deux perçages (3).

2. Fond tubulaire (1) selon la revendication 1,
**caractérisé en ce que**
- le corps de fond (2) est agencé dans un plan de fond (B),
- la moulure (7) est formée ouverte le long d'un sens d'étendue (E) à partir du corps de fond (2), dans lequel le sens d'étendue (E) s'étend perpendiculairement au plan de fond (B).

3. Fond tubulaire (1) selon la revendication 2,
**caractérisé en ce que**
- les deux perçages (3) forment respectivement un espace de réception (5) pour un corps tubulaire (4) qui s'étend le long du sens d'étendue (E) ;
- les deux espaces de réception (5) communiquent fluidiquement l'un avec l'autre au moyen de la moulure (7).

4. Fond tubulaire (1) selon la revendication 2 ou 3,
**caractérisé en ce que**
la moulure (7) est formée de manière oblongue et s'étend le long d'un sens longitudinal (L) qui s'étend orthogonalement au sens d'étendue (E).

5. Fond tubulaire (1) selon la revendication 4,
**caractérisé en ce que**
la moulure (7) présente coupée transversalement à son sens longitudinal (L) une forme arrondie.

6. Fond tubulaire (1) selon l'une quelconque des revendications 4 ou 5,
**caractérisé en ce que**
- la moulure (7) présente mesurée dans le sens d'étendue (E) vers le corps de fond (2) du fond tubulaire (1) une profondeur de moulure de 0,5 mm à 2 mm ; et/ou **en ce que**
- la moulure (7) présente mesurée perpendiculairement au sens d'étendue (E) et perpendiculairement au sens longitudinal (L) une largeur de moulure de 2 mm à 8 mm.

7. Fond tubulaire (1) selon l'une quelconque des revendications 4 à 6,
**caractérisé en ce que**
- au moins un des perçages (3), de préférence chaque perçage (3) est réalisé s'étendant de manière oblongue le long d'un sens longitudinal (L) pour la réception (respectivement) d'un corps tubulaire (4) formé de préférence comme tube plat (10) ; et/ou **en ce que**
- l'au moins un perçage (3), de préférence chaque perçage (3) est élargi comme une moulure dans le sens longitudinal (L) des deux extrémités.

8. Fond tubulaire (1) selon l'une quelconque des revendications 4 à 7,
**caractérisé en ce que**
- le corps de fond (2) présente plusieurs perçages (3) formés de manière sensiblement identique qui sont agencés le long du sens longitudinal (L), de préférence à équidistance les uns des autres, dans une ligne (11) ;
- le corps de fond (2) présente plusieurs moulures (7) formées de manière sensiblement identique, desquelles chaque fois une est agencée entre deux contigus des perçages (3) de sorte que des perçages (3) et des moulures (7) soient agencés en alternance dans la ligne (11).

9. Fond tubulaire (1) selon la revendication 8,
**caractérisé en ce que**
le corps de fond (2) comprend plusieurs lignes (11) au niveau de perçages (3) et moulures (7) qui sont réalisés de manière sensiblement identique et qui sont agencés perpendiculairement au sens d'étendue (E) et de manière angulaire, en particulier perpendiculairement au sens longitudinal (L) le long d'un sens transversal (Q) du fond tubulaire (1) à distance, en particulier à équidistance les uns des autres.

10. Fond tubulaire (1) selon l'une quelconque des revendications précédentes, **caractérisé en ce que**
au moins un des perçages (3), de préférence chaque perçage (3) est formé comme passage (12),
le passage (12) présente de manière éloignée de la moulure (7) un collet de passage (14) qui délimite partiellement l'espace de réception (5) du perçage (3) concerné formé comme passage (12).

11. Fond tubulaire (1) selon l'une quelconque des revendications précédentes, **caractérisé en ce que**
le corps de fond (2) est formé de manière sensiblement plane à l'écart des perçages (3) et de la moulure (7).

12. Échangeur de chaleur (16), en particulier pour un véhicule automobile,
- avec au moins un fond tubulaire (1) selon l'une quelconque des revendications précédentes,
- avec un nombre de corps tubulaires (4) qui correspond à un nombre de perçages (3) du fond tubulaire (1).
- dans lequel respectivement un des corps tubulaires (4) est reçu et fixé dans respectivement un des perçages (3) du fond tubulaire (1) de sorte qu'un contact étanche au fluide soit formé entre les corps tubulaires (4) et les perçages (3) respectifs.

13. Procédé (20) de fabrication d'un échangeur de chaleur (16) selon la revendication 12,
comprenant les mesures suivantes
a) la fourniture d'un fond tubulaire (1) selon l'une quelconque des revendications 1 à 11 ;
b) l'agencement d'au moins deux corps tubulaires (4) de sorte que respectivement un des corps tubulaires (4) soit reçu en formant un joint (21) dans respectivement un des perçages (3) ;
c) la jonction de matière des corps tubulaires (4) avec le fond tubulaire (1), dans lequel un moyen de jonction et/ou un moyen d'aide à la jonction est réparti au moyen de la moulure (7) du fond tubulaire (1) uniformément sur les joints (21).

14. Procédé (20) selon la revendication 13,
**caractérisé en ce que**
la jonction de matière selon la mesure c) est effectué par brasage, dans lequel une brasure est utilisée comme moyen de jonction et un moyen d'écoulement est utilisé comme moyen d'aide à la jonction.
